# EUROPEAN PATENT SPECIFICATION

(11) **EP 1 691 090 B1**
(45) Date of publication and mention of the grant of the patent: **26.12.2012**
(21) Application number: 04792964.1
(22) Date of filing: 26.10.2004
(51) Int. Cl.: F16C 33/64, F16C 35/063, F16C 19/18, B60B 35/18, B24B 9/00

(54) **BEARING DEVICE FOR WHEEL**
LAGERVORRICHTUNG FÜR RAD
ENSEMBLE ROULEMENT POUR ROUE

(30) Priority: 05.11.2003 JP 2003375104
(43) Date of publication of application: 16.08.2006
(73) Proprietor: NTN Corporation, Osaka-shi, Osaka 550-0003 (JP)
(72) Inventor: KAMETAKA, Kouji, Iwata-shi, Shizuoka 4388510 (JP); OHTSUKI, Hisashi, Iwata-shi, Shizuoka 4388510 (JP)
(74) Representative: Cohausz & Florack
(86) International application number: PCT/JP2004/015843
(87) International publication number: WO 2005/045268

(56) References cited:
- JP-A- 6 246 546
- JP-A- 10 038 056
- JP-A- 10 193 016
- JP-A- 11 129 703
- JP-A- 2000 145 797
- JP-A- 2001 239 803
- JP-A- 2002 303 329
- JP-A- 2002 349 585
- JP-A- 2003 194 073
- JP-A- 2003 232 377
- JP-B1- 51 028 878

## Description

### BACKGROUND OF THE INVENTION

### Field of the Invention

The present invention relates to a bearing apparatus for a wheel of vehicle for rotatably supporting a wheel of vehicle relative to a suspension system, and more particularly to a bearing apparatus for a wheel of vehicle intended to improve the durability of an inner ring fitted on a hub wheel, and a method for manufacturing the bearing apparatus.

### Description of background Art

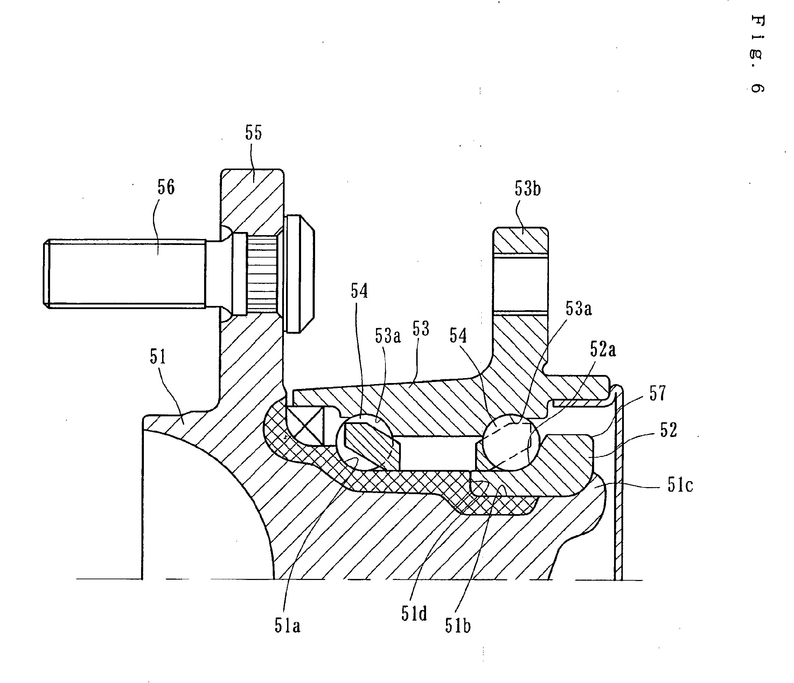

There are two types of bearing apparatus for a wheel of vehicle e.g. such as those for a driving wheel and a driven wheel and improvements in reduction of manufacturing cost and reduction of weight and size for improving fuel consumption have been achieved. One representative example of such a bearing apparatus of the prior art which is the so-called a third generation type is shown in Fig. 6.

The bearing apparatus of a wheel of vehicle of Fig. 6 has a hub wheel 51, an inner ring 52, an outer ring 53, and double row rolling elements 54, 54. The hub wheel 51 has a wheel mounting flange 55 for mounting a wheel (not shown) formed integrally therewith at one end thereof, an inner raceway surface 51a formed on the outer circumferential surface, and a cylindrical portion 51b axially extending from the inner raceway surface 51a. Hub bolts 56 for securing the wheel on the flange 55 are equidistantly arranged along the periphery of the flange 55. The inner ring 52 is press-fitted on the cylindrical portion 51b of the hub wheel 51 and is formed on its outer circumferential surface with an inner raceway surface 52a. The inner ring 51 is prevented from being axially slipped off from the cylindrical portion 51b of the hub wheel 51 by a caulked portion 51c formed by radially outwardly deforming the end of the cylindrical portion 51b of the hub wheel 51.

The outer ring 53 has a body mounting flange 53b integrally formed therewith and double row outer raceway surfaces 53a, 53a formed on the inner circumferential surface. The double row rolling elements 54 are contained freely rollably between the double row outer raceway surface 53a, 53a and the inner raceway surfaces 51a, 52a arranged oppositely to the outer raceway surfaces 53a, 53a.

The hub wheel 51 is formed by carbon steel including carbon of 0.40~0.80% by weight and hardened by high frequency induction hardening over a surface region (shown by cross-hatching) from a base of the wheel mounting flange 55 to the cylindrical portion 51b. The caulked portion 51c is remained as a non-hardened portion after forging. On the other hand the inner ring 52 is made of high carbon chrome bearing steel such as SUJ 2 and is hardened to its core by dipping quenching.

Thus it is possible to realize a bearing apparatus for a wheel of vehicle of a low manufacturing cost and having sufficient durability, to prevent generation of cracks in the caulked portion 51c, and to prevent the diameter of the inner ring 52 secured by the caulked portion 51c from being deformed to an extent causing practical problems. In addition it is possible to prevent generation of damages in the inner ring 52 such as cracks during its caulking operation, to keep the pre-load at its proper value, and also to reduce the manufacturing cost by reducing the number of parts and the working steps (see Japanese Laid-open Patent Publication No. 129703/1999). A rolling bearing unit having a rolling bearing attached to the outer periphery of a shaft body such as a vehicle-use hub unit is known from EP 1 302 336 A2.

### Disclosure of the Invention

### Problems tobe solved by the Invention

In such a bearing apparatus for a wheel of vehicle of the prior art, it is possible to prevent a force from being applied to the inner ring 52 by the caulking operation such that the force causes so large deformation of the diameter of the inner ring 52 that it influences the durability e.g. pre-load or rolling fatigue life etc. However, when plastically deforming the end of the cylindrical portion 51b to form the caulked portion 51c, a region near the caulked portion 51c is also plastically deformed and thus the inner diameter of the inner ring 52 is expanded radially outward and the hoop stress is generated within the inner ring 52.

In usual, the inner ring 52 is finished by grinding the inner raceway surface 52a, an inner circumferential surface fitted on the cylindrical portion 51b of the hub wheel 51, an end face of the front side contacting a shoulder 51d of the hub wheel 51, an end face of the back side, and the outer circumferential surface on which a seal is fitted. On the contrary, a chamfered outer circumferential surface 57 of the back side is remained as its turning finished condition before heat treatment. This chamfered outer circumferential surface 57 is intended to prevent of generation burrs due to gouge during working process and to eliminate a sharp and dangerous edge. However since its surface hardness is low before heat treatment, it is impossible to avoid the burrs or gouges during working process.

If there are burrs or gouges on the surface of the chamfered outer circumferential surface 57, the stress concentration will be promoted by the hoop stress caused in the inner ring 52 and thus the durability will be substantially reduces by cracks which would be caused in the inner ring 52 based on the burrs or gouges.

### SUMMARY OF THE INVENTION

It is therefore an object of the present invention to provide a bearing apparatus for a wheel of vehicle which is light weight and compact and advantageous in durability and reliability and a method for manufacturing the bearing apparatus.

### Means for solving problems

For achieving the above, there is provided, according to the present invention of claim 1, a bearing apparatus for a wheel of vehicle comprising: an inner member including a hub wheel having a wheel mounting flange formed integrally therewith at one end thereof and a cylindrical portion axially extending from the wheel mounting flange, including an inner ring fitted on the cylindrical portion; an outer member arranged around the inner member, and double row rolling elements contained freely rollably between the inner and outer members, the inner ring being secured in an axial direction relative to the hub wheel by a caulked portion formed by radially outwardly deforming the end of the cylindrical portion of the hub wheel characterized in that a chamfered outer circumferential surface of the back side of the inner ring is formed as a re-cut surface machined after its heat treatment.

According to the present invention, since the outer chamfered surface of the back side of the inner ring is formed as a re-cut surface machined after its heat treatment, it is possible to perfectly eliminate the burrs or gouges on the chamfered circumferential surface of the back side. Accordingly, it is possible to uniformly distribute the stress concentration which would be otherwise caused by the hoop stress caused in the inner ring during the caulking operation due to gouges on the chamfered surface and to prevent the generation of cracks in the inner wheel. Thus it is possible to provide a bearing apparatus for a wheel of vehicle which is light weight and compact and advantageous in durability and reliability.

According to the present invention, the hub wheel is directly formed on its outer circumferential surface with an inner raceway surface and its outer circumferential region from the base of the wheel mounting flange to the cylindrical portion through the inner raceway surface is hardened by high frequency induction hardening as having the surface hardness of 54~64 HRC, wherein caulked portion is remained as a non-quenched portion having a surface hardness less than 24 HRC after its forging, and the hoop stress generated within the inner ring by plastic deformation of the end of the cylindrical portion is limited less than 300 MPa. Thus it is possible to improve the strength and durability of the hub wheel and to prevent generation of cracks in the caulked portion. In addition, it is possible to prevent excessive deformation of the diameter of the inner ring which would cause practical problem in the inner ring and to reduce the ability of generation of damage by the hoop stress caused by the caulking operation and to maintain the pre-load of the inner ring at a proper value. Furthermore, it is possible to reduce the manufacturing cost with the reduction of the number of parts, and working and assembling steps.

According to the present invention, there is provided a method for manufacturing a bearing apparatus for a wheel of vehicle comprising an inner member including a hub wheel having a wheel mounting flange formed integrally therewith at one end thereof and a cylindrical portion axially extending from the wheel mounting flange, including an inner ring fitted on the cylindrical portion; an outer member arranged around the inner member, and double row rolling elements contained freely rollably between the inner and outer members, the inner ring being secured in an axial direction relative to the hub wheel by a caulked portion formed by radially outwardly deforming the end of the cylindrical portion of the hub wheel, characterized in that a chamfered outer circumferential surface of the back side of the inner ring is re-cut after its heat treatment. Thus it is possible to uniformly distribute the stress concentration which would be otherwise caused by the hoop stress caused in the inner ring during the caulking operation due to gouges on the chamfered surface and to prevent the generation of cracks in the inner wheel. Thus it is possible to improve the strength and durability of the inner ring.

According to the present invention, since the chamfered outer circumferential surface of the back side of the inner ring is re-cut by cutting tool of hardened steel after its heat treatment, it is possible to carry out high accuracy machining of the chamfered portion without influence of deformation due to heat treatment.

According to the present invention, since the chamfered outer circumferential surface of the back side of the inner ring is re-cut by a grinding stone at least simultaneously with an outer circumferential surface of larger diameter end of the inner ring, it is possible to carry out high accuracy machining of the chamfered portion without influence of deformation due to heat treatment. In addition, since the chamfered portion can be smoothly finished, it is possible to reduce the stress concentration therein.

According to the present invention, since the chamfered outer circumferential surface of the back side of the inner ring is re-cut by a grinding stone at least simultaneously with a backside end face 16 of the front side and an inner raceway surface 51a of the inner ring, it is possible to improve the accuracy of machining , to reduce working steps and to realize a low manufacturing cost.

### Effect of the Invention

According to the present invention, there is provided a bearing apparatus for a wheel of vehicle comprising: an inner member including a hub wheel having a wheel mounting flange formed integrally therewith at one end thereof and a cylindrical portion axially extending from the wheel mounting flange, including an inner ring fitted on the cylindrical portion; an outer member arranged around the inner member, and double row rolling elements contained freely rollably between the inner and outer members, the inner ring being secured in an axial direction relative to the hub wheel by a caulked portion formed by radially outwardly deforming the end of the cylindrical portion of the hub wheel characterized in that a chamfered outer circumferential surface of the back side of the inner ring is formed as a re-cut surface machined after its heat treatment. Thus it is possible to perfectly eliminate the burrs or gouges on the chamfered circumferential surface of the back side. Accordingly, it is possible to uniformly distribute the stress concentration which would be otherwise caused by the hoop stress caused in the inner ring during the caulking operation due to gouges on the chamfered surface and to prevent the generation of cracks in the inner wheel. Thus it is possible to provide a bearing apparatus for a wheel of vehicle which is light weight and compact and advantageous in durability and reliability.
According to the present invention, there is provided a bearing apparatus for a wheel of vehicle

Further according to the present invention, there is provided a method for manufacturing a bearing apparatus for a wheel of vehicle comprising an inner member including a hub wheel having a wheel mounting flange formed integrally therewith at one end thereof and a cylindrical portion axially extending from the wheel mounting flange, including an inner ring fitted on the cylindrical portion; an outer member arranged around the inner member, and double row rolling elements contained freely rollably between the inner and outer members, the inner ring being secured in an axial direction relative to the hub wheel by a caulked portion formed by radially outwardly deforming the end of the cylindrical portion of the hub wheel, characterized in that a chamfered outer circumferential surface of the back side of the inner ring is re-cut after its heat treatment. Thus it is possible to uniformly distribute the stress concentration which would be otherwise caused by the hoop stress caused in the inner ring during the caulking operation due to gouges on the chamfered surface and to prevent the generation of cracks in the inner wheel. Thus it is possible to improve the strength and durability of the inner ring.

### Best mode for carrying out the Invention

The best mode for carrying out the present invention is a bearing apparatus for a wheel of vehicle comprising: an inner member including a hub wheel having a wheel mounting flange formed integrally therewith at one end thereof and a cylindrical portion axially extending from the wheel mounting flange, including an inner ring fitted on the cylindrical portion; an outer member arranged around the inner member, and double row rolling elements contained freely rollably between the inner and outer members, the inner ring being secured in an axial direction relative to the hub wheel by a caulked portion formed by radially outwardly deforming the end of the cylindrical portion of the hub wheel characterized in that a chamfered outer circumferential surface of the back side of the inner ring is formed as a re-cut surface machined after its heat treatment.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of the bearing apparatus for a wheel of the present invention;
- Fig. 2: is an enlarged partial view of Fig. 1;
- Fig. 3: is an explanatory view showing a method for re-cutting of a chamfered outer circumferential surface according to the present invention;

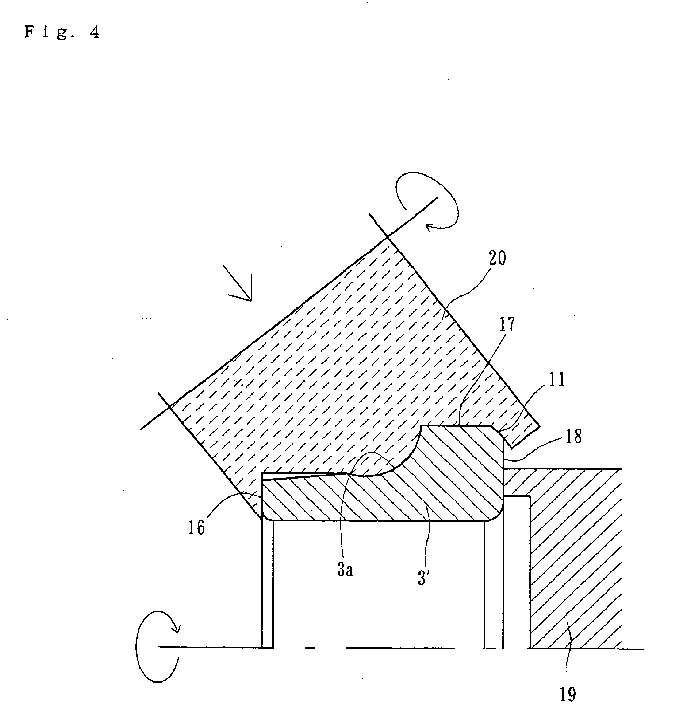

- Fig. 4: is another explanatory view showing the other re-cutting;
- Fig. 5: is a longitudinal section view showing a second embodiment of the bearing apparatus for a wheel of the present invention; and
- Fig. 6: a longitudinal section view showing a bearing apparatus for a wheel of vehicle of the prior art.

### DESCRIPTION OF THE PREFERRED EMBODIMENTS

### First embodiment

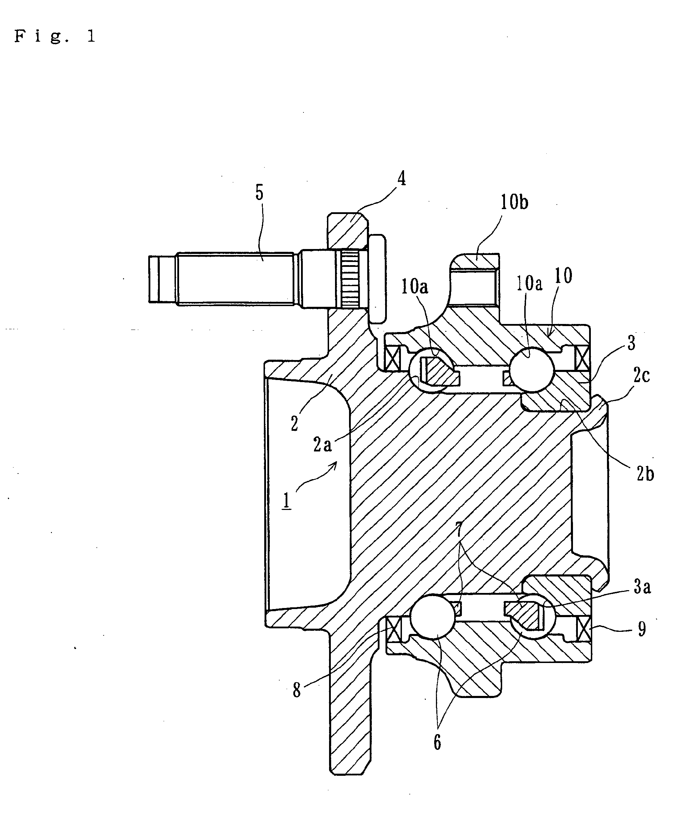

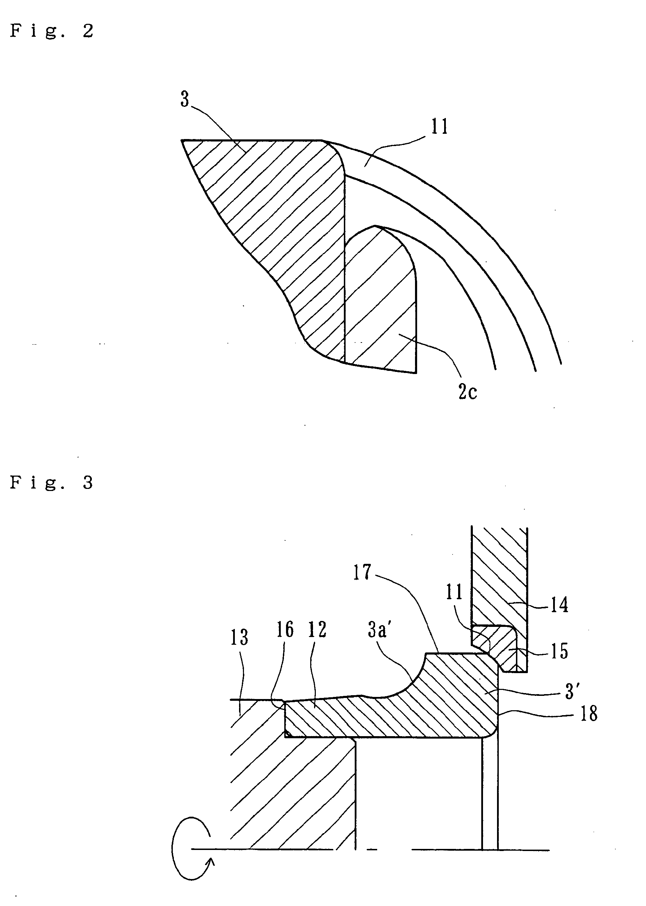

Fig. 1 shows a first embodiment of a bearing apparatus for a wheel of vehicle of the present invention and Fig. 2 is an enlarged partial view of Fig. 1. In the description below, a term "outboard side" of the apparatus denotes a side which is positioned outside of the vehicle body and a term "inboard side" of the apparatus denotes a side which is positioned inside of the body when the bearing apparatus is mounted on the vehicle body.

The illustrated bearing apparatus for a wheel of vehicle comprises an inner member 1, an outer member 10 and double row rolling elements (balls) 6, 6 retained freely rollably between the inner and outer members 1, 10. The inner member 1 comprises a hub wheel 2 and an inner ring 3 press-fitted on the hub wheel 2. The hub wheel 2 is integrally formed with a wheel mounting flange 4 for mounting a wheel (not shown) on its outer peripheral surface at the end of outboard side. Hub bolts 5 for securing the wheel on the flange 4 are equidistantly arranged along the periphery of the flange 4. The hub wheel 2 is also formed on its outer circumferential surface with one inner raceway surface and has a cylindrical portion 2b axially extending from the inner raceway surface 2a. The inner ring 3 is fitted on the cylindrical portion 2b and formed on its outer circumferential surface with the other inner raceway surface 3a. The inner ring 3 is secured in an axial direction relative to the hub wheel 2 by a caulked portion 2c formed by radially outwardly deforming the end of the cylindrical portion 2b of the hub wheel 2. According to this embodiment since it is unnecessary to control the amount of pre-load by using a fastening nut as in the prior art, it possible to provide a self-retaining structure which can keep the proper pre-load of bearing for a long term.

The outer member 10 is integrally formed on its outer circumferential surface with a body mounting flange 10b and is also formed on its inner circumferential surface with double row outer raceway surfaces 10a, 10a. Double row rolling elements 6, 6 are freely rollably held by cages 7, 7 between the outer and inner raceway surfaces 10a, 10a; 2a, 3a. Seals 8, 9 are arranged at the ends of the outer member 10 to prevent leak of lubricating grease contained within bearing as well as ingress of rain water or dusts from outside.

Although the illustrated bearing apparatus is the so-called third generation type in which the inner raceway surface 2a is directly formed on the outer circumferential surface of the hub wheel 2, the present invention is not limited thereto and can be applied to the first or second generation type in which one pair of inner rings are press-fitted on the cylindrical portion of the hub wheel. In addition, although the illustrated bearing apparatus uses the double row angular ball bearing, it is possible to use other bearing e.g. double row tapered roller bearing using tapered rollers as the rolling elements.

The hub wheel 2 is made of medium carbon steel including carbon of 0.40~0.80% by weight such as S53C and hardened as having surface hardness of 54~64 HRC by high frequency induction hardening at the inner raceway surface 2a of the outboard side, a seal land portion with which the seal 8 contacts, and the axially extending cylindrical portion 2b. The caulked portion 2c is remained as a non-quenched portion having a surface hardness less than 24 HRC after its forging. The inner ring 3 is made of high carbon chrome bearing steel such as SUJ2 and is hardened to its core by dipping quenching to have a surface hardness of 54~64 HRC. The thickness of the inner ring 3 and the caulked portion 2c as well as the caulking load are properly set so that the hoop stress caused within the inner ring 3 is limited less than 300 MPa.

Thus it is possible to improve the strength and durability of the hub wheel 2 and to prevent generation of cracks in the caulked portion 2c. In addition, it is possible to prevent excessive deformation of the diameter of the inner ring 3 which would cause practical problem in the inner ring 3 and to reduce the ability of generation of damage by the hoop stress caused by the caulking operation and to maintain the pre-load of the inner ring 3 at a proper value. Furthermore, it is possible to reduce the manufacturing cost with the reduction of the number of parts, and working and assembling steps.

The outer member 10 is made of medium carbon steel including carbon of 0.40~0.80% by weight such as S53C and its double row outer raceway surfaces 10a, 10a and the inner circumferential surface of the outer member 10 to which the seals 8, 9 contact are hardened by high frequency induction quenching to have a surface hardness of 54~64 HRC.

In this embodiment, the chamfered outer circumferential surface 11 of the back side of the inner ring 3 is formed by a cut surface of hardened steel machined after its heat treatment as shown in Fig. 2. That is, the chamfered surface and other portion of the inner ring 3 are cut by turning and then its predetermined portion is ground after heat treatment, but only the chamfered outer circumferential surface of the back side is re-cut before the grinding process. The re-cutting process can be carried out after the grinding process, however it is preferable to carry out the re-cutting process before the grinding process since gouges would be sometimes caused on the inner raceway surface 3a during the cutting process of the chamfered portion 11.

Fig. 3 is an explanatory view showing such a re-cutting method. The reference working surface of the heat treated inner ring 3' is set by abutting the end face 16 of the front side and then the chamfered surface 11 of the back side is cut by turning using a bite 14. The cutting bite 14 used may be that to which a cemented carbide chip 15 formed as having a desired configuration and dimension is bonded or the chamfered surface may be machined with use of a NC lathe. The feeding amount of bite for machining the chamfered surface 11 is set within about 1~3 mm both in axial and radial directions.

Fig. 3 is an explanatory view showing such a re-cutting method. The reference working surface of the heat treated inner ring 3' is set by abutting the end face 16 of the front side and then the chamfered surface 11 of the back side is re-cut by turning using a bite 14. The cutting bite 14 used may be that to which a cemented carbide chip 15 formed as having a desired configuration and dimension is bonded or the chamfered surface may be machined with use of a NC lathe. The feeding amount of bite for machining the chamfered surface 11 is set within about 1-3 mm both in axial and radial directions.

More particularly, each portion of the inner ring 3' is ground by plunge cutting with the end face 18 of the back side being magnetically attracted and then rotating the grinding stone 20 in a same rotational direction as that of the inner ring 3' and feeding it at a predetermined inclined direction. This makes it possible to reduce the number of working steps and to assure ground surfaces of high accuracy since desirable relative circumferential speed can be obtained between each working surface and the grinding stone 20. In addition, it is possible to reduce the stress concentration at the edge portion between the circumferential surface 17 and the chamfered portion 11 since they are connected via a smooth rounded corner without any edge therebetween.

According to this embodiment, since the chamfered portion 11 of the back side of the inner ring 3' is re-cut by the cutting bite 14 or the grinding stone 20 after its heat treatment, it is possible to perfectly eliminate the burrs or gouges caused on the chamfered surface in prior working steps. Accordingly, the stress concentration which would be caused by the gouges on the chamfered surface 11 can be distributed or reduced and thus generation of cracks on the inner ring 3 is prevented to improve the durability of the inner ring 3.

### Second embodiment

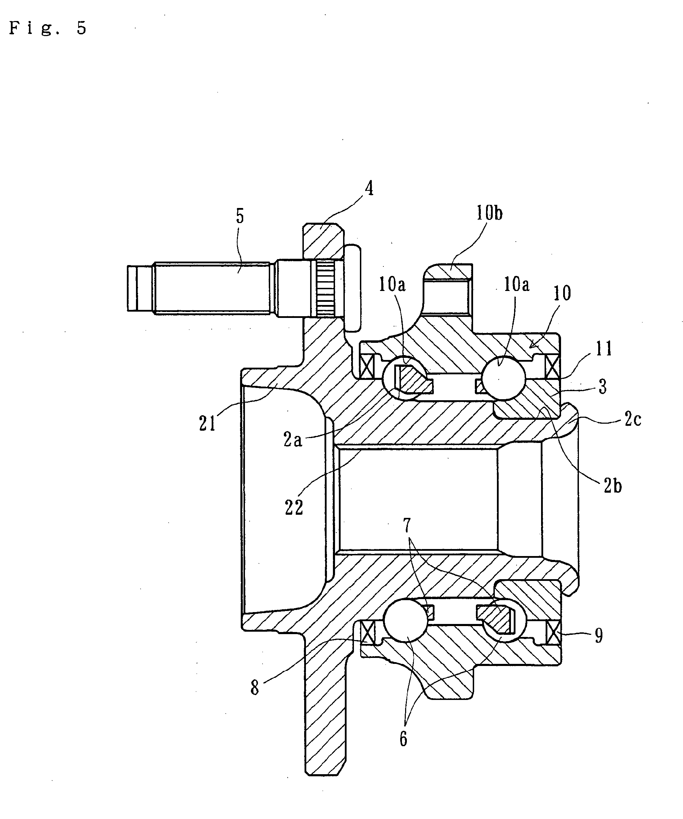

Fig. 5 is a longitudinal section view showing a second embodiment of the bearing apparatus for a wheel of the present invention. Same reference numerals are used for designating same parts having same functions used in the first embodiment.

The hub wheel 21 is integrally formed with a wheel mounting flange 4 for mounting a wheel (not shown) on its outer peripheral surface at the end of outboard side. The hub wheel 21 is formed on its outer circumferential surface with one inner raceway surface 2a and on its inner circumferential surface with a serration (spline) 22 into which an outer joint member of a constant velocity universal joint (not shown) is fitted. The hub wheel 21 has a cylindrical portion 2b axially extending from the inner raceway surface 2a. The inner ring 3 is secured in an axial direction relative to the hub wheel 21 by a caulked portion 2c formed by radially outwardly deforming the end of the cylindrical portion 2b of the hub wheel 21.

Similarly to the previously described first embodiment, since the chamfered outer circumferential portion 11 of the back side of the inner ring 3 is re-cut after heat treatment, the burrs or gouges caused on the chamfered surface 11 during previous working steps can be perfectly eliminated. Accordingly, it is possible to uniformly distribute the stress concentration which would be otherwise caused by the hoop stress caused in the inner ring during the caulking operation due to gouges on the chamfered surface and to prevent the generation of cracks in the inner wheel. Thus it is possible to provide a bearing apparatus for a wheel of vehicle which is advantageous in durability and reliability.

### Applicability in industry

The bearing apparatus for a wheel of vehicle can be applied to that having the self-retaining structure of the first, second and third generation types in which the inner ring is press-fitted on the cylindrical portion of the hub wheel and firmly secured thereon by caulking the end of the cylindrical portion.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A bearing apparatus for a wheel of vehicle comprising:
an inner member (1) including a hub wheel (2, 21) having a wheel mounting flange (4) formed integrally therewith at one end thereof and a cylindrical portion (2b) axially extending from the wheel mounting flange (4), including an inner ring (3) fitted on the cylindrical portion (2b);
an outer member (10) arranged around the inner member (1), and double row rolling elements (6, 6) contained freely rollably between the inner and outer members (1, 10), the inner ring (3) being secured in an axial direction relative to the hub wheel (2, 21) by a caulked portion (2c) formed by radially outwardly deforming the end of the cylindrical portion (2b) of the hub wheel (2, 21) **characterized in that** a chamfered outer circumferential surface (11) of the back side of the inner ring (3) is formed as a re-cut surface machined after its heat treatment, and **in that** the caulked portion (2c) is remained as a non-quenched portion.

2. A bearing apparatus for a wheel of vehicle of claim 1
wherein the hub wheel (2, 21) is directly formed on its outer circumferential surface with an inner raceway surface (2a) and its outer circumferential region from the base of the wheel mounting flange (4) to the cylindrical portion (2b) through the inner raceway surface (2a) is hardened by high frequency induction hardening as having the surface hardness of 54-64 HRC, wherein caulked portion (2c) is remained as a non-quenched portion having a surface hardness less than 24 HRC after its forging, and wherein the hoop stress generated within the inner ring (3) by plastic deformation of the end of the cylindrical portion (2b) is limited less than 300 MPa.

3. A method for manufacturing a bearing apparatus for a wheel of vehicle comprising an inner member (1) including a hub wheel (2, 21) having a wheel mounting flange (4) formed integrally therewith at one end thereof and a cylindrical portion axially extending from the wheel mounting flange (4), including an inner ring (3) fitted on the cylindrical portion (2b); an outer member (10) arranged around the inner member (1), and double row rolling elements (6, 6) contained freely rollably between the inner and outer members (1, 10), the inner ring (3) being secured in an axial direction relative to the hub wheel (2, 21) by a caulked portion (2c) formed by radially outwardly deforming the end of the cylindrical portion (2b) of the hub wheel (2, 21), **characterized in that** a chamfered outer circumferential surface (11) of the back side of the inner ring (3) is pre-formed by cutting and is re-cut after its heat treatment, and **in that** the caulked portion (2c) is remained as a non-quenched portion.

4. A method for manufacturing a bearing apparatus for a wheel of vehicle of claim 3 wherein the chamfered outer circumferential surface (11) of the back side of the inner ring (3) is re-cut by cutting tool (14) of hardened steel after its heat treatment.

5. A method for manufacturing a bearing apparatus for a wheel of vehicle of claim 3 wherein the chamfered outer circumferential surface (11) of the back side of the inner ring (3) is re-cut by a grinding stone (20) at least simultaneously with an outer circumferential surface (17) of larger diameter end of the inner ring (3).

6. A method for manufacturing a bearing apparatus for a wheel of vehicle of claim 5 wherein the chamfered outer circumferential surface (11) of the back side of the inner ring (3) is re-cut by a grinding stone (20) at least simultaneously with a backside end face (16) of the front side and an inner raceway surface (51a) of the inner ring.

## Patentansprüche

1. Lagervorrichtung für ein Fahrzeugrad, umfassend:
ein inneres Glied (1), das eine Radnabe (2, 21) enthält, mit einem Radanbringungsflansch (4), der einstückig damit an einem Ende davon ausgebildet ist, und einem zylindrischen Abschnitt (2b), der axial von dem Radanbringungsflansch (4) verläuft, enthaltend einen Innenring (3), der an dem zylindrischen Abschnitt (2b) montiert ist;
ein äußeres Glied (10), das um das innere Glied (1) angeordnet ist, und zweireihige Rollelemente (6, 6), die frei rollbar zwischen dem inneren und äußeren Glied (1, 10) enthalten sind, wobei der Innenring (3) in einer axialen Richtung bezüglich der Radnabe (2, 21) durch einen verstemmten Abschnitt (2c) befestigt ist, welcher durch Verformen des Endes des zylindrischen Abschnitts (2b) der Radnabe (2, 21) radial nach außen ausgebildet ist,
**dadurch gekennzeichnet, dass** eine abgefaste Außenumfangsfläche (11) der Rückseite des Innenrings (3) als erneut geschnittene Fläche, die nach ihrer Wärmebehandlung maschinell bearbeitet ist, ausgebildet ist, und dass der verstemmte Abschnitt (2c) als nicht abgeschreckter Abschnitt verbleibt.

2. Lagervorrichtung für ein Fahrzeugrad nach Anspruch 1, wobei die Radnabe (2, 21) auf ihrer Außenumfangsfläche direkt mit einer inneren Laufringfläche (2a) ausgebildet ist, und ihr Außenumfangsbereich von der Basis des Radanbringungsflanschs (4) zum zylindrischen Abschnitt (2b) über die innere Laufringfläche (2a) derart durch Hochfrequenzinduktionshärten gehärtet ist, dass er eine Oberflächenhärte von 54 bis 64 HRC aufweist, wobei der verstemmte Abschnitt (2c) als nicht abgeschreckter Abschnitt mit einer Oberflächenhärte unter 24 HRC nach seinem Schmieden verbleibt, und wobei die Umfangsspannung, die innerhalb des Innenrings (3) durch plastische Verformung des Endes des zylindrischen Abschnitts (2b) erzeugt ist, auf unter 300 MPa begrenzt ist.

3. Verfahren zum Herstellen einer Lagervorrichtung für ein Fahrzeugrad, umfassend ein inneres Glied (1), das eine Radnabe (2, 21) enthält, mit einem Radanbringungsflansch (4), der einstückig damit an einem Ende davon ausgebildet ist, und einem zylindrischen Abschnitt, der axial von dem Radanbringungsflansch (4) verläuft, enthaltend einen Innenring (3), der an dem zylindrischen Abschnitt (2b) montiert ist; ein äußeres Glied (10), das um das innere Glied (1) angeordnet ist, und zweireihige Rollelemente (6, 6), die frei rollbar zwischen dem inneren und äußeren Glied (1, 10) enthalten sind, wobei der Innenring (3) in einer axialen Richtung bezüglich der Radnabe (2, 21) durch einen verstemmten Abschnitt (2c) befestigt ist, welcher durch Verformen des Endes des zylindrischen Abschnitts (2b) der Radnabe (2, 21) radial nach außen ausgebildet ist,
**dadurch gekennzeichnet, dass** eine abgefaste Außenumfangsfläche (11) der Rückseite des Innenrings (3) durch Schneiden vorgeformt wird und nach ihrer Wärmebehandlung erneut geschnitten wird, und dass der verstemmte Abschnitt (2c) als nicht abgeschreckter Abschnitt verbleibt.

4. Verfahren zum Herstellen einer Lagervorrichtung für ein Fahrzeugrad nach Anspruch 3, wobei die abgefaste Außenumfangsfläche (11) der Rückseite des Innenrings (3) durch ein Schneidwerkzeug aus gehärtetem Stahl nach ihrer Wärmebehandlung erneut geschnitten wird.

5. Verfahren zum Herstellen einer Lagervorrichtung für ein Fahrzeugrad nach Anspruch 3, wobei die abgefaste Außenumfangsfläche (11) der Rückseite des Innenrings (3) durch einen Schleifstein (20) zumindest gleichzeitig mit einer Außenumfangsfläche (17) eines Endes mit größerem Durchmesser des Innenrings (3) erneut geschnitten wird.

6. Verfahren zum Herstellen einer Lagervorrichtung für ein Fahrzeugrad nach Anspruch 5, wobei die abgefaste Außenumfangsfläche (11) der Rückseite des Innenrings (3) durch einen Schleifstein (20) zumindest gleichzeitig mit einer Rückseitenendfläche (16) der Vorderseite und einer inneren Laufringfläche (51a) des Innenrings erneut geschnitten wird.

## Revendications

1. Dispositif à roulements pour une roue de véhicule comprenant:
un élément intérieur (1) comportant une roue à moyeu (2, 21) ayant une bride de fixation de roue (4) formée de façon solidaire avec ladite roue, à une extrémité de celle-ci, et une partie cylindrique (2b) s'étendant axialement à partir de la bride de fixation de roue (4), comportant une bague intérieure (3) montée sur la partie cylindrique (2b);
un élément extérieur (10) agencé autour de l'élément intérieur (1), et des éléments de roulement à double rangée (6, 6) contenus en pouvant rouler librement entre les éléments intérieur et extérieur (1, 10), la bague intérieure (3) étant fixée, suivant une direction axiale par rapport à la roue à moyeu (2, 21), par une partie matée (2c) formée en déformant, vers l'extérieur dans le sens radial, l'extrémité de la partie cylindrique (2b) de la roue à moyeu (2, 21),
**caractérisé en ce qu'**une surface circonférentielle extérieure chanfreinée (11) du côté arrière de la bague intérieure (3) est formée comme une surface redécoupée,
usinée après son traitement thermique, et **en ce que** la partie matée (2c) est conservée comme une partie non trempée.

2. Dispositif à roulements pour une roue de véhicule selon la revendication 1, dans lequel la roue à moyeu (2, 21) est formée directement sur sa surface circonférentielle extérieure, avec une surface de chemin de roulement intérieur (2a), et sa région circonférentielle extérieure, à partir de la base de la bride de fixation de roue (4) jusqu'à la partie cylindrique (2b), traversant la surface de chemin de roulement intérieur (2a), est durcie par trempe par induction à haute fréquence, en ayant la dureté de surface comprise entre 54 et 64 HRC, dans lequel la partie matée (2c) est conservée comme une partie non trempée ayant une dureté de surface inférieure à 24 HRC après son forgeage, et dans lequel la contrainte périphérique générée à l'intérieur de la bague intérieure (3), par déformation plastique de l'extrémité de la partie cylindrique (2b), est limitée à une valeur inférieure à 300 MPa.

3. Procédé de fabrication d'un dispositif à roulements pour une roue de véhicule, comprenant un élément intérieur (1) comportant une roue à moyeu (2, 21) ayant une bride de fixation de roue (4) formée de façon solidaire avec ladite roue, à une extrémité de celle-ci, et une partie cylindrique s'étendant axialement à partir de la bride de fixation de roue (4), comportant une bague intérieure (3) montée sur la partie cylindrique (2b) ; un élément extérieur (10) agencé autour de l'élément intérieur (1), et des éléments de roulement à double rangée (6, 6) contenus en pouvant rouler librement entre les éléments intérieur et extérieur (1, 10), la bague intérieure (3) étant fixée, suivant une direction axiale par rapport à la roue à moyeu (2, 21), par une partie matée (2c) formée en déformant, vers l'extérieur dans le sens radial, l'extrémité de la partie cylindrique (2b) de la roue à moyeu (2, 21),
**caractérisé en ce qu'**une surface circonférentielle extérieure chanfreinée (11) du côté arrière de la bague intérieure (3) est préformée par découpe et est redécoupée après son traitement thermique, et **en ce que** la partie matée (2c) est conservée comme une partie non trempée.

4. Procédé de fabrication d'un dispositif à roulements pour une roue de véhicule selon la revendication 3, dans lequel la surface circonférentielle extérieure chanfreinée (11) du côté arrière de la bague intérieure (3) est, après son traitement thermique, redécoupée par un outil de coupe (14) en acier trempé.

5. Procédé de fabrication d'un dispositif à roulements pour une roue de véhicule selon la revendication 3, dans lequel la surface circonférentielle extérieure chanfreinée (11) du côté arrière de la bague intérieure (3) est redécoupée par une pierre à aiguiser (20), au moins en même temps qu'une surface circonférentielle extérieure (17) d'une extrémité de plus grand diamètre de la bague intérieure (3).

6. Procédé de fabrication d'un dispositif à roulements pour une roue de véhicule selon la revendication 5, dans lequel la surface circonférentielle extérieure chanfreinée (11) du côté arrière de la bague intérieure (3) est redécoupée par une pierre à aiguiser (20), au moins en même temps qu'une face d'extrémité arrière (16) du côté avant et qu'une surface de chemin de roulement intérieur (51a) de la bague intérieure.
